# EUROPEAN PATENT APPLICATION

(11) **EP 4 787 629 A1**
(43) Date of publication of application: **05.08.2026**
(21) Application number: 24793964.8
(22) Date of filing: 29.05.2024
(51) Int. Cl.: H01R 13/02, H01R 43/16, H01M 50/574, H01R 12/70

(54) **HIGH-LOW VOLTAGE INTEGRATED CONNECTOR, BDU, AND PROCESSING METHOD THEREFOR**

(30) Priority: 28.09.2023 CN 202311272530
(71) Applicant: Wuhan Jason Electronics Technology Co., Ltd., Wuhan, Hubei 430058 (CN)
(72) Inventor: DU, Zhaohui, Wuhan, Hubei 430058 (CN)
(74) Representative: Kuhnen & Wacker Patent- und Rechtsanwaltsbüro PartG mbB
(86) International application number: PCT/CN2024/095939
(87) International publication number: WO 2025/066228

(57) **Abstract**

The present invention relates to the technical field of automobile BDU connectors, and provides a high-low voltage integrated connector, which comprises a printed circuit board (PCB) and an integrated component, wherein a first electrical component is fixedly arranged on the PCB; the integrated component comprises a plastic plate and a plurality of conducting strips arranged at intervals, the conducting strips are fixedly arranged in the plastic plate, with two ends extending out of the plastic plate and are fixedly arranged on a second electrical component or the PCB, and the ends of the conducting strips are electrically connected to the second electrical component or are electrically connected to the first electrical component through the PCB. Through arranging a PCB board with a relatively hard texture and an integrated component with toughness, the present invention not only ensures the degree of stability of the high-low voltage connector at a position prone to loosening, but also improves the overall toughness to absorb the internal stress generated during the assembly or use of the BDU, thereby ensuring the normal operation of the BDU.

## Description

### Field of the Invention

The present invention relates to the technical field of automobile BDU connectors, and in particular to a high-low voltage integrated connector, a BDU and a processing method thereof.

### Background of the Invention

Battery Disconnect Unit (BDU), or battery pack disconnect unit is an important component of new energy vehicles, which provides functions such as charge and discharge control and circuit overload protection for the high-voltage system of new energy vehicles. In order to achieve high-voltage sampling and low-voltage control of the BDU, the internal part of the BDU usually adopts a wiring harness connection, a PCB board connection or an FPC connection to electrically connect the high and low voltage signals.

The invention patent with patent publication number CN112498267A discloses a high and low voltage integrated BDU, comprising a BDU body, the BDU body comprises a housing, an upper end of the housing is provided with an opening, the opening is provided with a top cover configured to seal the opening, the housing is provided with a main positive relay, a main negative relay, a pre-charging resistor, a pre-charging relay, a heating relay and a PCB integrated module, the pre-charging relay and the pre-charging resistor are arranged in parallel with the main positive relay, the main negative relay and the heating relay are arranged in series, the main positive relay, the main negative relay, the pre-charging relay and the heating relay are electrically connected to a PCB integrated module respectively, a battery positive electrode connecting piece and a battery negative electrode connecting piece are respectively provided on one end of the PCB integrated module, and a motor positive electrode connecting piece and a motor negative electrode connecting piece are provided on the other end. The beneficial effects are: separation of high and low voltage circuits, integrated packaging and high safety and reliability.

In the above technical solution, in order to improve the compactness of the internal structure of the BDU and avoid difficulties in arranging and fixing the wiring harness in the housing, the PCB integrated module is adopted to connect various electrical components. However, since the PCB board is hard and lacks toughness, it is not only difficult to absorb the internal stress generated during assembly, but also easily affected by the vibration of the BDU, causing the connection to fall off, thereby affecting the normal operation of the BDU.

### Summary of the Invention

In view of this, the present invention provides a high and low voltage integrated connector, a BDU and a processing method thereof, which can improve the toughness of the high and low voltage connector in the BDU while ensuring the firmness of the fixation, thereby ensuring the normal operation of the BDU.

The technical solution of the present invention is implemented as follows: on the one hand, the present invention provides a high-low voltage integrated connector, comprising a PCB board and an integrated component, wherein:
a plurality of the PCB boards are provided, and a first electrical component is fixedly arranged on the PCB board;
the integrated component comprises a plastic plate and a plurality of conducting strips arranged at intervals, the conducting strips are fixedly arranged in the plastic plate, with two ends extending out of the plastic plate and fixedly arranged on a second electrical component or the PCB, and the ends of the conducting strips are electrically connected to the second electrical component or are electrically connected to the first electrical component through the PCB board.

On the basis of the above technical solution, preferably, a plurality of insulating holes are provided on the plastic plate;
the integrated component further comprises a connecting plate and an insulating adhesive, wherein:
a plurality of the connecting plates are integrally formed between two adjacent conducting strips, and the plurality of the connecting plates are all cut off by the insulating holes; and
the plurality of the insulating holes are all filled with the insulating adhesive.

More preferably, at least one end of the conducting strip is fixed to and electrically connected to the PCB board, wherein
if one end of the conducting strip is fixed to and electrically connected to the PCB board, and the other end is fixed to and electrically connected to the second electrical component, the conducting strip comprises a wire strip and a connecting piece, and the wire strip is fixedly arranged in the plastic plate, with two ends extending out of the plastic plate, the connecting piece is integrally formed at one end of the wire strip, the connecting piece is fixed to and electrically connected to the second electrical component, one end of the wire strip away from the connecting piece is fixed to and electrically connected to the PCB board, a Z-shaped bending portion is provided on the connecting piece and on one end of the wire strip away from the connecting piece by means of a bending method, and a side of the connecting piece close to the second electrical component resists on the second electrical component fixed to and electrically connected to the connecting piece;
if the two ends of the conducting strip are respectively fixed to and electrically connected to the two PCB boards, the conducting strip comprises the wire strip, the wire strip is fixedly arranged in the plastic plate, with two ends extending out of the plastic plate, the two ends of the wire strip are both fixed to and electrically connected to the PCB boards, and the two ends of the wire strip are each provided with a Z-shaped bending portion by means of a bending method; and
a plurality of the wire strips are flush with one another on a side away from the PCB board.

More preferably, if the two PCB boards are electrically connected to the same second electrical component through the conducting strips, the two wire strips in the two conducting strips are integrally formed with the same connecting piece, and the connecting piece is provided with two bending portions.

In a second aspect, the present invention provides a high-low voltage integrated BDU, comprising the above-mentioned connector, a first electrical component, a second electrical component and a housing, wherein
the PCB board and the plastic board are provided with at least two fixing holes, and the connecting piece is provided with at least one fixing hole;
the second electrical component is fixedly arranged on the housing, and a plurality of heat anchor rods are integrally formed on the second electrical component and the housing, the positions of the plurality of the heat anchor rods correspond one to one with that of the plurality of the fixing holes, and the PCB board and the plastic board are both anchored to the housing through the fixing holes and the heat anchor rods, and the connecting piece and the second electrical component are anchored to the heat anchor rods through the fixing holes.

On the basis of the above technical solution, preferably, the high-low voltage integrated BDU further comprises a plurality of high-voltage copper busbars, the high-voltage copper busbars are fixedly arranged in the housing and are located on a side of the second electrical component away from the PCB board;
the first electrical component comprises a cable connector, a pre-charging resistor and a pre-charging relay, two PCB boards are provided, the cable connector is fixedly arranged on one of the PCB boards, and the pre-charging resistor and the pre-charging relay are fixedly arranged on the other PCB board; the cable connector, the pre-charging resistor and the pre-charging relay are electrically connected to the conducting strips through the PCB board;
the second electrical component comprises a fuse, a main positive relay, a fast-charging positive relay, a main negative relay, a Shunt diverter and a plurality of terminal posts, and the fuse, the main positive relay, the fast-charging positive relay, the main negative relay and the Shunt diverter are all fixedly arranged on the housing;
power supply ends of the fuse, the main positive relay and the fast-charging positive relay are successively connected in series through the high-voltage copper busbars to form a positive circuit; the power supply ends of the pre-charging resistor and the pre-charging relay are successively connected in series through the PCB board and then connected in parallel with the main positive relay to form a pre-charging circuit; the power supply ends of the Shunt diverter and the main negative relay are successively connected in series through the high-voltage copper busbars to form a negative circuit;
the high-voltage copper busbars connected in series with the main negative relay and the fast-charging positive relay are fixed and electrically connected to the terminal posts, and one end of each terminal post away from the high-voltage copper busbar is fixed to and electrically connected to the connecting plate;
the conducting strips comprise a plurality of high-voltage conducting strips and a plurality of low-voltage conducting strips, and a current output end of the fuse, a current output end of the main positive relay, a current output end of the fast-charging positive relay, a current input end of the main negative relay and a current output end of the Shunt diverter are all electrically connected to the cable connector through the high-voltage conducting strips and the PCB board; and two control ends of the main positive relay, two control ends of the fast-charging positive relay, two control ends of the main negative relay and two control ends of the pre-charging relay are all electrically connected to the cable connector through the low-voltage conducting strips and the PCB board.

More preferably, the second electrical component further comprises a fast-charging negative relay, the fast-charging negative relay is fixedly arranged on the housing, the power supply end of the fast-charging negative relay is connected in series with the negative circuit through the high-voltage copper busbars, the current input end of the fast-charging negative relay is electrically connected to the cable connector through the high-voltage conducting strips and the PCB board, and the two control ends of the fast-charging negative relay are electrically connected to the cable connector through the low-voltage conducting strips and the PCB board.

More preferably, the plurality of the high-voltage copper busbars comprise at least one supporting copper busbar, and the supporting copper busbar comprises two connecting portions, a supporting portion and two reinforcing portions, wherein:
one end of the connecting portion is fixed to and electrically connected to the second electrical component, and the two connecting portions are arranged in parallel and at intervals;
the supporting portion is located between the two connecting portions and is perpendicular thereto;
the two reinforcing portions are respectively located between the two connecting portions and the supporting portion, a cross section of the reinforcing portion is U-shaped, and the two ends thereof are respectively continuously arranged with the connecting portion and the supporting portion and are integrally formed; and
the housing is provided with a reinforcement groove, the reinforcing portion is clamped with the reinforcement groove, and the supporting portion resists on an inner wall of the housing.

In a third aspect, the present invention provides a method for processing the high-low voltage integrated BDU, comprising the following steps:
**S1**, taking out a copper plate, and punching a hole in the copper plate through a punching machine so as to obtain a first semi-finished product consisting of the conducting strips, the connecting plates and a reinforcing member;
**S2**, punching the bending portion of the first semi-finished product through the punching machine according to actual requirements so as to obtain a second semi-finished product;
**S3**, injecting plastic on an outer side of the second semi-finished product through an injection molding machine so as to obtain a third semi-finished product;
**S4**, first punching the third semi-finished product through the punching machine so as to remove the connecting plates and the plastic in the insulating holes, cut off the plurality of the connecting plates and remove the plastic in the reinforcing member and the fixing holes and weight-reducing holes, and then injecting the insulating adhesive into an interior of the insulating holes to obtain the integrated component;
**S5**, preparing the PCB board on which the cable connector is installed and the PCB board on which the pre-charging resistor and the pre-charging relay are installed;
**S6**, installing the high-voltage copper busbars and a plurality of the second electrical components successively in the housing, and connecting the second electrical components through the high-voltage copper busbars;
**S7**, mounting the PCB board and the integrated component on the housing, and clamping the fixing holes inside the two with the heat anchor rods at corresponding positions thereto, heating and deforming the heat anchor rods through a heat anchor device, and adopting the deformed heat anchor rods to resist and fix the PCB board and the integrated component; and
**S8**, welding the ends of the wire strip and the connecting piece to the corresponding positions on the PCB board or the second electrical component by means of laser welding.

On the basis of the above technical solution, preferably, in S1, the reinforcement member comprises a rectangular ring-shaped frame located at a periphery of the conducting strip and the connecting plate and integrally formed with the two through the connecting plate or a filling plate located between a plurality of the conducting strips and integrally formed with the conducting strips through the connecting plate.

The high and low voltage integrated connector, BDU and processing method thereof of the present invention have the following beneficial effects compared with the prior art:
(1) Through arranging a PCB board with a relatively hard texture and an integrated component with toughness, not only can the degree of stability of the high-low voltage connector be ensured at a position prone to loosening, but also the overall toughness can be improved to absorb the internal stress generated during the assembly or use of the BDU, thereby ensuring the normal operation of the BDU;
(2) Through setting the connecting plate between the conducting strips, the conducting strips can be bonded at intervals after being punched on the copper plate, which not only facilitates the injection molding of the plastic plate, but also avoids the short circuit problem caused by the change of the position of the conducting strips during the injection molding of the plastic plate, and through setting the insulating holes and the insulating adhesive, the conducting strips can be sealed and insulated, thereby ensuring the normal use of the connector;
(3) Through providing the bending portion on one end of the wire strip close to the PCB board and on the connecting piece, not only can the wire strip and the connecting piece absorb the internal stress generated during the assembly or use of the BDU, but also the connecting piece can be attached to the second electrical component of different heights while ensuring that the wires are in the same plane, so that the connector can be suitable for electrical components of different models;
(4) Through improving the electrical architecture and optimizing the layout of high-voltage collection or low-voltage control connectors, not only can better collection effects be achieved, but the internal structure of the BDU can also be simplified and the compactness of the internal structure of the BDU can be improved;
(5) Through punching a plurality of conducting strips on the same copper plate, the connecting piece and the second electrical component are fixed by laser welding, thereby improving the production and assembly efficiency of the BDU;
(6) Through providing fixing holes and heat anchor rods to replace the bolt fixing method, not only can the rapid assembly and positioning of the electrical connector with the housing and the electrical components be improved, but also the torque risk caused by tightening the bolts on the connector in the prior art can be avoided; and
(7) Through providing supporting copper busbars and buffering copper bars, the connection strength of the internal structural parts of the BDU can be improved or the internal stress generated during its operation can be absorbed, thereby increasing the service life of the BDU.

### Brief Description of the Drawings

In order to better illustrate the technical solution in the embodiments of the present invention or the prior art, the following will briefly introduce the drawings needed in the description of the embodiments or the prior art, and it is obvious that the drawings in the following description are only a part of embodiments of the present invention, for those of ordinary skill in the art, other drawings may also be obtained based on these drawings without any inventive effort.
Fig. 1 is a three-dimensional view of a high-low voltage integrated connector of the present invention;
Fig. 2 is a three-dimensional view of an integrated component in a high-low voltage integrated connector of the present invention;
Fig. 3 is an exploded view of a location of X in Fig. 2;
Fig. 4 is a three-dimensional view of a conducting strip in a high-low voltage integrated connector of the present invention;
Fig. 5 is a three-dimensional view of a wire strip and a connecting piece in a high-low voltage integrated connector of the present invention;
Fig. 6 is a three-dimensional diagram of a high-low voltage integrated BDU of the present invention;
Fig. 7 is an exploded view of a location of Y in Fig. 6;
Fig. 8 is a top view of the second electrical component 4 in a high-low voltage integrated BDU of the present invention;
Fig. 9 is a three-dimensional view of a high-voltage copper busbar in a high-low voltage integrated BDU of the present invention;
Fig. 10 is a three-dimensional view of a supporting copper busbar in a high-low voltage integrated BDU of the present invention;
Fig. 11 is a cross-sectional view of an installation position of a supporting copper busbar in a high-low voltage integrated BDU of the present invention;
Fig. 12 is a cross-sectional view of a buffering copper busbar in a high-low voltage integrated BDU of the present invention;
Fig. 13 is a top view of the first semi-finished product comprising a frame in a method for processing a high-low voltage integrated BDU of the present invention;
Fig. 14 is a top view of the first semi-finished product comprising a filling plate in a method for processing a high-low voltage integrated BDU of the present invention;
Fig. 15 is a right side view of a second semi-finished product in a method for processing a high-low voltage integrated BDU of the present invention;
Fig. 16 is a top view of a conducting strip in a high-low voltage integrated connector of the present invention;
Fig. 17 is an electrical schematic diagram of a high-low voltage integrated BDU of the present invention;
Fig. 18 is an electrical schematic diagram of a high-low voltage integrated BDU with a fast-charging negative relay added of the present invention.

In the figures: 1-PCB board; 101-fixing hole; 2-integrated component; 21-plastic plate; 22-conducting strip; 221-wire strip; 222-connecting piece; 23-connecting plate; 24-insulating adhesive; 25-frame; 26-filling plate; 201-insulating hole; 202-bending portion; 203-weight-reducing hole; 3-the first electrical component; 31-cable connector; 32-pre-charging resistor; 33-pre-charging relay; 4-the second electrical component; 41-fuse; 42-main positive relay; 43-fast-charging positive relay; 44-main negative relay; 45-Shunt diverter; 46-terminal post; 5-housing; 51-heat anchor rod; 501-reinforcement groove; 6-high-voltage copper busbar; 61-supporting copper busbar; 611-connecting portion; 612-supporting portion; 613-reinforcing portion.

### Detailed Description of the Embodiments

In the following, the technical solutions in the present invention will be clearly and completely described with reference to the specific embodiments of the present invention, obviously, the described embodiments are only a part of the present invention, not all of the embodiments. Based on the embodiments in the present invention, all other embodiments obtained by a person of ordinary skill in the art without inventive efforts shall fall within the protection scope of the present invention.

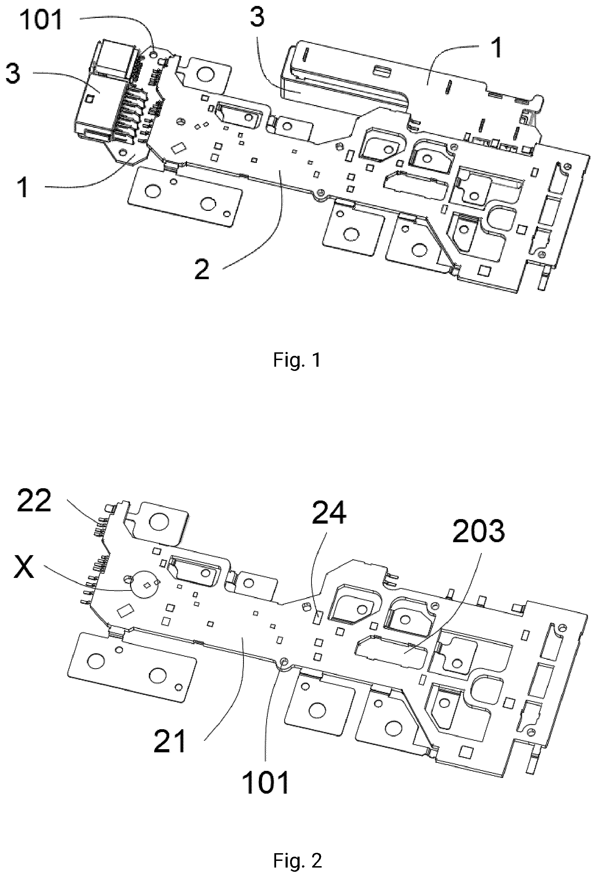

As shown in Figs. 1-16, a high-low voltage integrated BDU of the present invention comprises a connector, a first electrical component 3, a second electrical component 4, a housing 5 and a plurality of high-voltage copper busbars 6.

The connector is configured to communicate the first electrical component 3 with the second electrical component 4 so as to achieve low-voltage control and high-voltage collection inside the BDU. The connector comprises a PCB board 1 and an integrated component 2.

The PCB board 1 is configured to carry the first electrical component 3. A plurality of the PCB boards 1 are arranged, each fixed with the first electrical component 3. The hard texture of the PCB board 1 can ensure the degree of stability of the installation of the first electrical component 3 and prevent the first electrical component 3 from loosening during use.

The integrated component 2 is configured to realize the conduction between the first electrical component 3 and the second electrical component 4. The integrated component 2 comprises a plastic plate 21 and a plurality of conducting strips 22 arranged at intervals. The plastic plate 21 is made of a plastic material with a tough texture. The conduction strips 22 are fixedly arranged in the plastic plate 21, and both ends thereof extend out of the plastic plate 21 and are fixedly arranged on the second electrical component 4 or the PCB board 1. The ends of the conducting strips 22 are electrically connected to the second electrical component 4 or are electrically connected to the first electrical component 3 through the PCB board 1 (adopting copper traces etched on the PCB board). Since the plastic plate 21 has a certain toughness, when assembling the BDU or using the BDU, the integrated component 2 can absorb the internal stress of the BDU, thereby preventing the connection ends of the integrated component 2 and the first electrical component 3 and the second electrical component 4 from falling off, thereby improving the fixing firmness of the integrated component 2 and ensuring the normal operation of the BDU.

The integrated component 2 is composed of a plurality of conducting bars 22 and a plastic plate 21. When processing the integrated component 2, the plurality of the conducting strips 22 are usually punched out from the copper plate one by one, and then the plurality of mutually independent conducting strips 22 are placed and positioned, and finally injection molding is performed on the outer side of the conducting strips 22. This production process is relatively complicated (the positioning operation of the conducting strips 22 is complicated and not easy to fix), and the conducting strips 22 are compounded with high and low voltage signal connection lines, and the interval between the high and low voltage lines is small, existing a risk of short circuit. In view of this, a connecting plate 23 can be provided in the integrated component 2, so that a plurality of the connecting plates 23 are integrally formed between two adjacent conducting strips 22, so that the plurality of the conducting strips 22 can be punched out integrally on the same copper plate, and in this punching process, the shape, position and spacing of the conducting strips 22 are fixed by the connecting plate 23, eliminating the complicated processing steps such as placement and positioning, thereby improving the processing efficiency of the integrated component 2. Since the connecting plate 23 will cause conduction among the conducting strips 22, the connecting plate 23 needs to be cut off in the subsequent processing steps. It is preferred to open a plurality of insulating holes 201 on the plastic plate 21 so that the plurality of the connecting plates 23 are cut off by the insulating holes 201 to ensure the insulation of the conducting strips 22. Insulating adhesive 24 should also be provided in the integrated component 2, and the plurality of the insulating holes 201 are filled with the insulating adhesive 24, which can not only improve the insulation performance among the conducting strips 22, but also seal the connecting plate 23 to prevent it from corrosion.

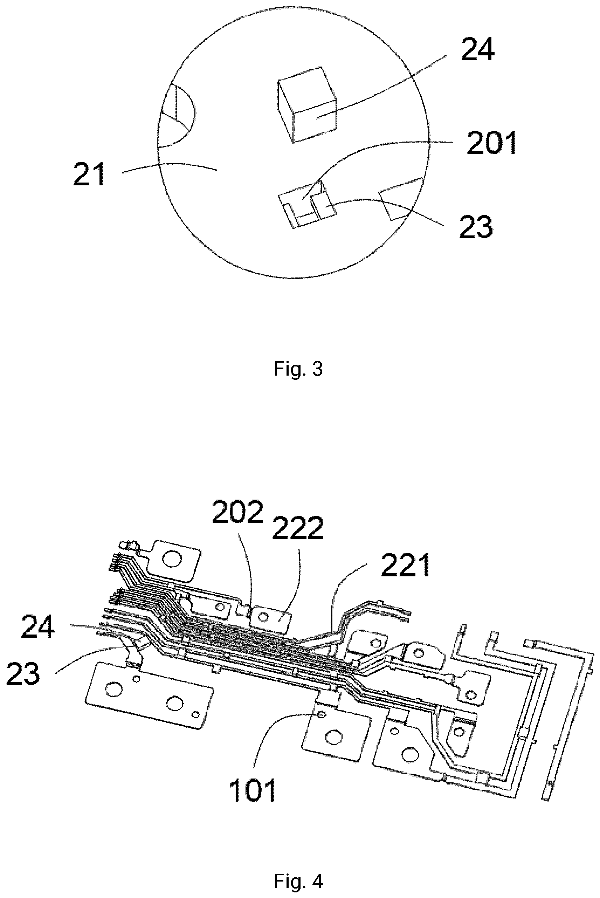

The conducting strip 22 integrates the low-voltage control lines and the high-voltage collection lines. Although the rules for connecting the electrical components are different, at least one end of the conducting strip 22 is fixed to and electrically connected to the PCB board 1. If one end of the conducting strip 22 is fixed to and electrically connected to the PCB board 1, and the other end is fixed to and electrically connected to the second electrical component 4, the conducting strip 22 comprises a wire strip 221 and a connecting piece 222. The wire strip 221 is fixedly arranged in the plastic plate 21, with two ends extending out of the plastic plate 21. The connecting piece 222 is integrally formed on one side of the wire strip 221, the connecting piece 222 is fixed to and electrically connected to the second electrical component 4, and the end of the wire strip 221 away from the connecting piece 222 is fixed to and electrically connected to the PCB board 1, as shown in Fig. 4, several conducting strips 22 with connecting pieces 222 in the figure belong to this situation, and the connecting piece 222 and the end of the wire strip 221 away from the connecting piece 222 are both provided with a Z-shaped bending portion 202 by means of a bending method, and the side of the connecting piece 222 close to the second electrical component 4 resists on the second electrical component 4 fixed and electrically connected thereto. As another case, if the two ends of the conducting strip 22 are respectively fixed to and electrically connected to the two PCB boards 1, the conducting strip 22 comprises the wire strip 221. The wire strip 221 is fixedly arranged in the plastic plate 21, with two ends extending out of the plastic plate 21. The two ends of the wire strip 221 are both fixed to and electrically connected to the PCB boards 1. For example, as shown in Fig. 4, the conducting strip 22 without the connecting piece 222, the two ends of the wire strip 221 are each provided with a Z-shaped bending portion 202 by means of a bending method. This structural can not only reduce the soldering installation space occupied by the integrated component 2 on the PCB board 1, but also increase the contact area between the integrated component 2 and the second electrical component 4, thereby improving the degree of stability between the two. The setting of the bending portion 202 can not only enable the conducting strip 22 to absorb the internal stress of its connecting end, but also allow a plurality of wire strips 221 to be flush with one another on a side away from the PCB board 1, that is, the middle positions of the plurality of wire strips 221 are in the same plane, thereby reducing the space occupied by the integrated component 2 and improving the compactness of the internal structure of the BDU. At the same time, through setting bending portions 202 of different heights on each connecting piece 222, different connecting pieces 222 can be installed at different heights in the BDU, thereby adapting to the different heights of the second electrical components 4.

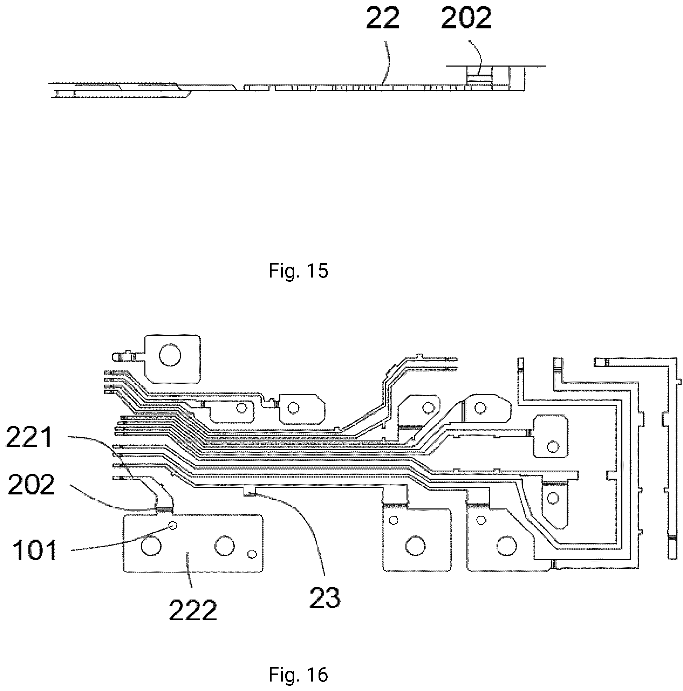

Further, as shown in Fig.16, if two PCB boards 1 are electrically connected to the same second electrical component 4 through the conducting strips 22 (the two conducting strips 22 connected by the first connecting piece 222 at the bottom and on the right in the figure), the two wire strips 221 in the two conducting strips 22 are integrally formed with the same connecting piece 222, and the connecting piece 222 is provided with two bending portions 202, so as to save materials and improve the compactness of the BDU structure.

The first electrical component 3 comprises a cable connector 31, a pre-charging resistor 32 and a pre-charging relay 33. In this working condition, two PCB boards 1 are provided, the cable connector 31 is fixedly provided on one of the PCB boards 1, and the pre-charging resistor 32 and the pre-charging relay 33 are fixedly provided on the other PCB board 1. The cable connector 31, the pre-charging resistor 32 and the pre-charging relay 33 are electrically connected to the conducting strips 22 through the PCB board 1. Since the cable connector 31 is prone to movement when being plugged in and out of the external wire, it is necessary to use the PCB board 1 to strengthen its fixation. Compared with other electrical components, the pre-charging resistor 32 and the pre-charging relay 33 do not require too many wiring connections, and only need to be connected in series. Therefore, the PCB board 1 is also used to support and fix the two, thereby ensuring the stability of the cable connector 31, the pre-charging resistor 32 and the pre-charging relay 33 during use and preventing any movement.

The second electrical component 4 comprises a fuse 41, a main positive relay 42, a fast-charging positive relay 43, a main negative relay 44, a Shunt diverter 45 and a plurality of terminal posts 46.

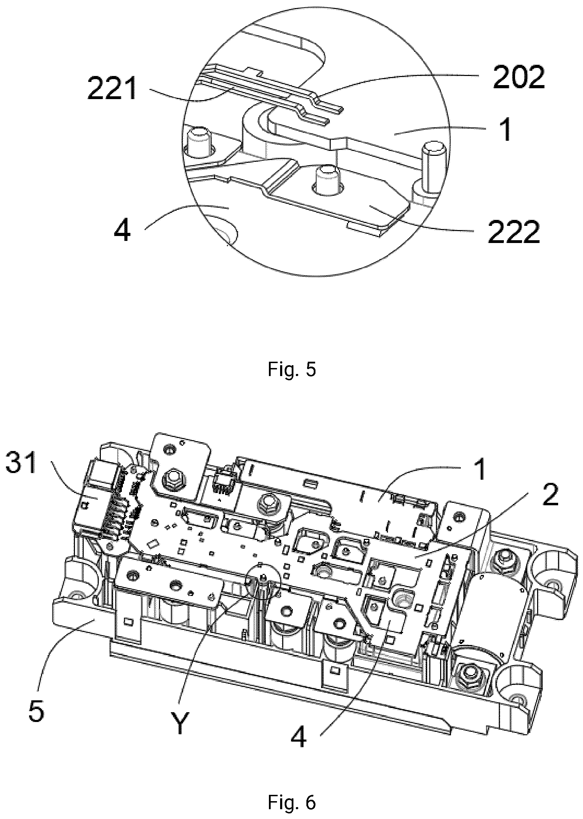

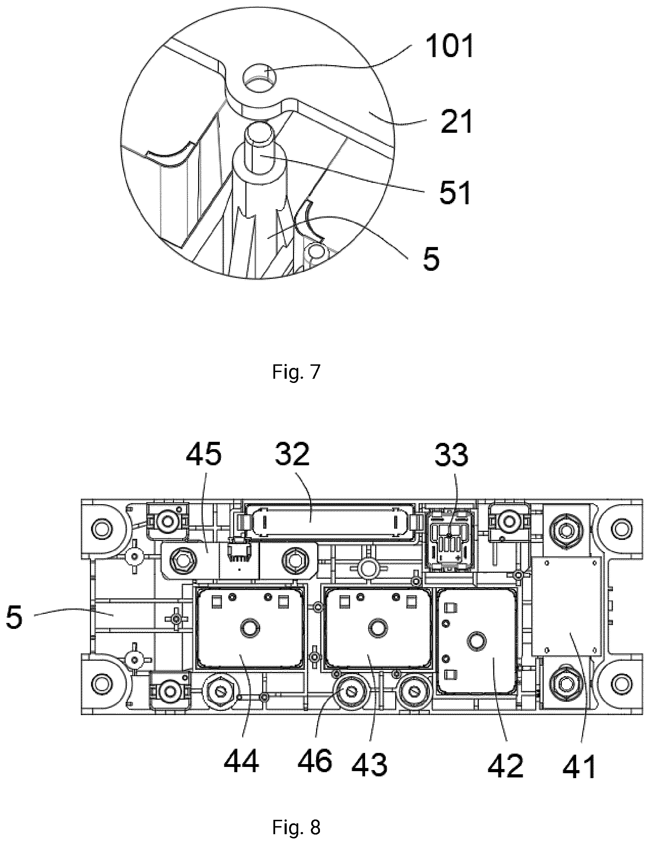

The housing 5 is the main frame of the BDU, configured to carry and protect other components. The connector and the second electrical component 4 are all fixedly arranged on the housing 5, that is, the PCB board 1, the integrated component 2, the fuse 41, the main positive relay 42, the fast-charging positive relay 43, the main negative relay 44 and the Shunt diverter 45 are all fixedly arranged on the housing 5. Specifically, in the prior art, the electrical components and the PCB board 1 are usually fixed by bolts. However, after the wire strip 221 and the connecting piece 222 are embedded in the plastic board 21, the structural strength of the protruding end portion thereof is relatively weak. When the bolts are tightened, the torque will drive the integrated component 2 to rotate and cause damage to the integrated component 2. In order to solve this problem, it is preferred to open at least two fixing holes 101 on the PCB board 1 and the plastic board 21, and open at least one fixing hole 101 on the connecting piece 222 (the larger the area, the more the number of holes opened), and a plurality of heat anchor rods 51 are integrally formed on the second electrical component 4 and the housing 5. As shown in Figs. 6 and 7, the positions of the plurality of the heat anchor rods 51 correspond one to one with that of the plurality of the fixing holes 101, so as to make the PCB board 1 and the plastic board 21 both anchor to the housing 5 through the fixing holes 101 and the heat anchor rods 51, and make the connecting piece 222 and the second electrical component 4 anchor to the heat anchor rods 51 through the fixing holes 101. The anchoring is implemented through passing the heat anchor rod 51 through the fixing hole 101, so that the heat anchor rod 51 is deformed by heat, and the deformed heat anchor rod 51 is adopted to resist and fix the PCB board 1, the plastic board 21 or the connecting piece 222. The operation process does not generate torque, so there is no torque risk.

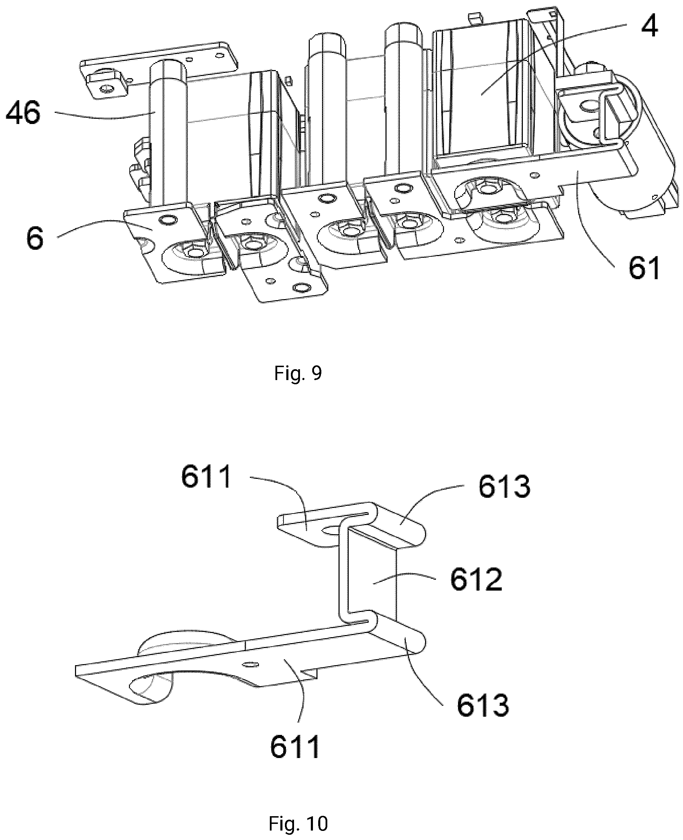

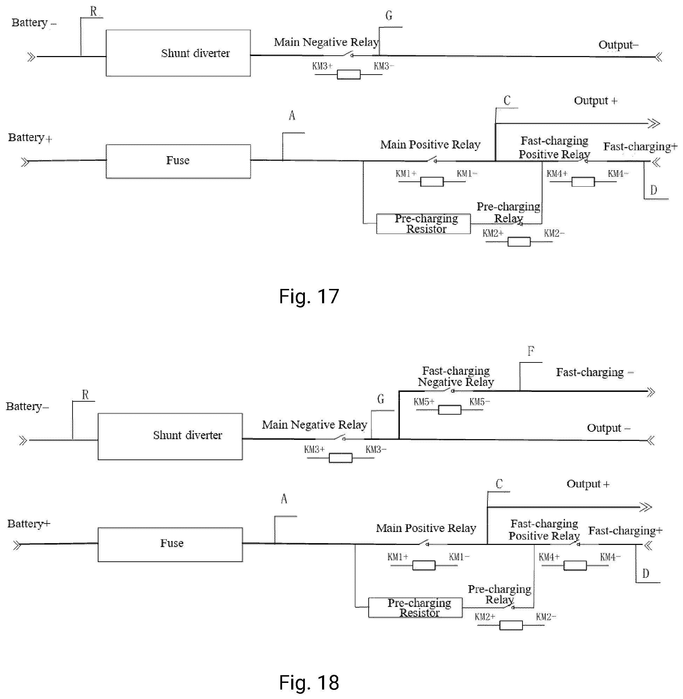

The high-voltage copper busbar 6 is configured to realize the high-voltage electrical conduction inside the BDU. The high-voltage copper busbar 6 is fixedly arranged in the housing 5 and is located on the side of the second electrical component 4 away from the PCB board 1. As shown in Figs. 6 and 9, through optimizing the internal structure of the BDU, the control terminal connector and the low-voltage information collection connector of the second electrical component 4 are located on the same side of the second electrical component 4, and the high-voltage copper busbar 6 is located on the other side of the second electrical component 4, so as to provide good protection for the inside of the BDU. As shown in Fig. 9 and Fig. 17, the power supply ends of the fuse 41, the main positive relay 42 and the fast-charging positive relay 43 are successively connected in series through the high-voltage copper busbars 6 to form a positive circuit. The power supply ends of the pre-charging resistor 32 and the pre-charging relay 33 are successively connected in series through the PCB board 1 and then connected in parallel with the main positive relay 42 to form a pre-charging circuit. The power supply ends of the Shunt diverter 45 and the main negative relay 44 are successively connected in series through the high-voltage copper busbars 6 to form a negative circuit. The high-voltage copper busbars 6 connected in series with the main negative relay 44 and the fast-charging positive relay 43 are fixed and electrically connected to the terminal posts 46, and one end of each terminal post 46 away from the high-voltage copper busbar 6 is fixed to and electrically connected to the connecting plate 222, thereby conducting the conducting strips 22 and the high-voltage copper busbars 6 located on both sides of the second electrical component 4. The conducting strips 22 can perform conduction on the high-voltage copper busbars 6 on one side of the control end of the second electrical component 4, thereby realizing the collection of high-voltage information, avoiding the bending design of the circuitry, simplifying the internal structure of the BDU, and improving the compactness of structure.

The conduction strip 22 comprise a plurality of high-voltage conducting strips and a plurality of low-voltage conducting strips, which are configured to perform high-voltage collection and low-voltage control respectively. As shown in Fig. 17, the current output end of the fuse 41, the current output end of the main positive relay 42, the current output end of the fast-charging positive relay 43, the current input end of the main negative relay 44 and the current output end of the Shunt diverter 45 are respectively provided with connecting points A, C, D, G and R, and the high-voltage signals at various positions in the high-voltage conduction circuit are collected by adopting the connecting points A, C, D, G and R. The connecting points A, C, D, G and R are all electrically connected to the cable connector 31 through the high-voltage conduction busbars and the PCB board 1, so as to collect the high-voltage signals through the cable connector 31. Correspondingly, the two control ends (KM1+ and KM1-) of the main positive relay 42, the two control ends (KM4+ and KM4-) of the fast-charging positive relay 43, the two control ends (KM3+ and KM3-) of the main negative relay 44 and the two control ends (KM2+ and KM2-) of the pre-charging relay 33 are all electrically connected to the cable connector 31 through the low-voltage conducting strips and the PCB board 1, so as to perform low-voltage control through the cable connector 31. The connecting points A, C, D, G, KM1+, KM1-, KM2+, KM2-, KM3+, KM3-, KM4+ and KM4- of the conducting strip 22 fully cover all the points in the BDU that require high-voltage signal acquisition and low-voltage control, thereby realizing comprehensive control of the BDU.

A fast-charging negative relay can also be provided in the second electrical component 4, and the fast-charging negative relay is fixedly provided on the housing 5, as shown in Fig. 18, the power supply end of the fast-charging negative relay is connected in series with the negative circuit through the high-voltage copper busbars 6, that is, the power supply ends of the Shunt diverter 45 and the main negative relay 44 and the power supply end of the fast-charging negative relay are connected in series successively through the high-voltage copper busbars 6 to form a negative circuit. In order to realize high-voltage collection and low-voltage control of the fast-charging negative relay, it is preferred to set a connecting point F at the current input end of the fast-charging negative relay, and electrically connect the connecting point F to the cable connector 31 through the high-voltage conducting strips and the PCB board 1, so that the high-voltage signal at the position of the fast-charging negative relay can be collected through the cable connector 31, and the two control ends (KM5+ and KM5-) of the fast-charging negative relay 47 are electrically connected to the cable connector 31 through the low-voltage conducting strip and the PCB board 1, so as to perform low-voltage control through the cable connector 31.

There are a large number of second electrical components 4 in the BDU, and the shapes thereof are different, resulting in differences in the installation position and shape of the high-voltage copper busbars 6. The plurality of the high-voltage copper busbars 6 will comprise at least one supporting copper busbar 61, which plays an auxiliary supporting role, such as the high-voltage copper busbar 6 at the bottom of the fuse 41 in Fig. 9. The fuse 41 is smaller in size than other electrical components, and its placement position is prone to tilt. Therefore, it is necessary to allow the high-voltage copper busbar 6 below it to play a certain supporting role, and set as a supporting copper busbar 61. For the structure of each supporting copper busbar 61, it is preferred to set the supporting copper busbar 61 to comprise two connecting portions 611, a supporting portion 612 and two reinforcing portions 613. One ends of the connecting portions 611 are fixed to and electrically connected to the second electrical component 4, and the two connecting portions 611 are parallel and arranged at intervals. The supporting portion 612 is located between the two connecting portions 611 and is perpendicular thereto, that is, the two connecting portions 611 and the supporting portion 612 form an I-shape or a U-shape. The two reinforcing portions 613 are respectively located between the two connecting portions 611 and the supporting portion 612. The cross-section of the reinforcing portion 613 is U-shaped, and the two ends thereof are respectively continuously arranged with the connecting portion 611 and the supporting portion 612 and are integrally formed. As shown in Fig. 10, the two U-shaped reinforcing portions 613 are located on the right side of the supporting portion 612, and the two connecting portions 611 are located on the left side of the supporting portion 612. The reinforcing portions 613 correspond one-to-one with the connecting portions 611, so that the supporting copper busbar 61 forms an I-shape as a whole, which has a certain anti-overturning effect, thereby providing a better support effect for the electrical components above it.

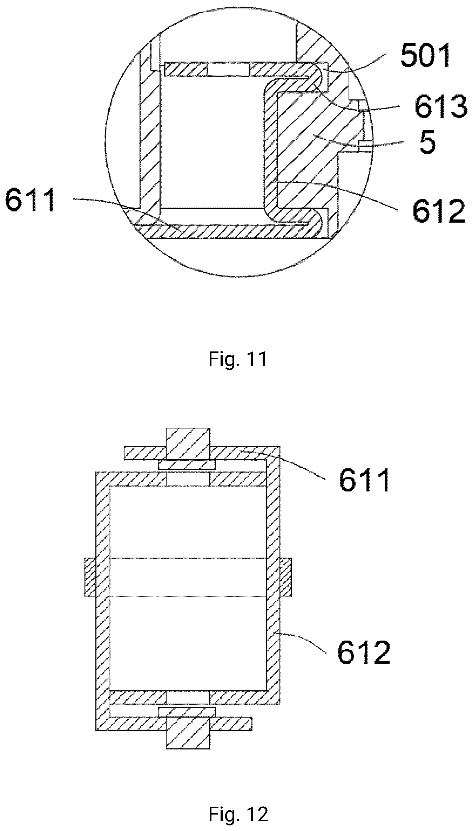

In order to improve the supporting effect of the supporting copper busbar 61, it is preferred to open a reinforcement groove 501 on the housing 5, so that the reinforcing portion 613 is clamped with the reinforcement groove 501, so that the supporting portion 612 resists on the inner wall of the housing 5. Of course, the supporting copper busbar 61 can also be directly injection-molded in the housing 5. As shown in Fig. 11, the upper and lower sides of the two reinforcing portions 613 resist on the reinforcement groove 501, and the right side of the supporting portion 612 resists on the housing 5. When the supporting copper busbar 61 is installed between the electrical components, it will not move, and due to its I-shaped shape and the support of the housing 5, the supporting copper busbar 61 can be prevented from deformation. If the supporting copper busbar 61 is detachable, as shown in Fig. 11, it can only be slid to the left when it is separated from the electrical components, so as to install and remove the supporting copper bar 61.

The structural strength of the supporting copper busbar 61 is relatively increased, which can provide a good supporting effect, but the effect of absorbing the internal stress is not very ideal. Therefore, a buffering copper busbar can also be provided. Compared with the supporting copper busbar 61, the buffering copper busbar also comprises two connecting portions 611 arranged in parallel and a supporting portion 612, but does not have a reinforcing portion 613. The three are combined to form a U-shaped structure. When used under working conditions with relatively high stress, the two buffering copper busbars are set opposite to each other and connected in a sliding manner. Specifically, one of the connecting portions 611 of a buffering copper busbar is connected to the supporting portion 612 of another buffering copper busbar in a sliding and electrical manner, while the other connecting portion 611 of the buffering copper busbar is fixed to and electrically connected to the electrical component. As shown in Fig.12, the two buffering copper busbars are respectively fixed to the two electrical components. The internal stress can be absorbed through sliding the two buffering copper busbars in face-to-face directions or opposite directions. Of course, in order to improve the safety of the two buffering copper busbars, tape or other structural parts can be used to simply limit the two buffering copper busbars.

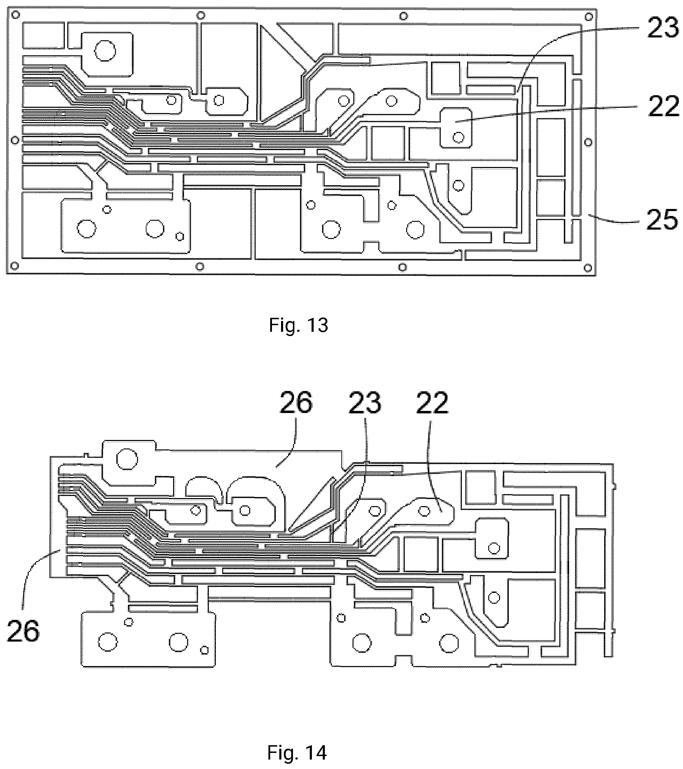

A method for processing a high-low voltage integrated BDU of the present invention is as follows:
S1, A copper plate is taken out, and a hole is punched in the copper plate through a punching machine so as to obtain a first semi-finished product consisting of the conducting strips 22, the connecting plates 23 and a reinforcing member. The reinforcing member comprises a rectangular ring-shaped frame 25 located at a periphery of the conducting strip 22 and the connecting plate 23 and integrally formed with the two through the connecting plate 23 or a filling plate 26 located between a plurality of the conducting strips 22 and integrally formed with the conducting strips 22 through the connecting plate 23. As shown in Fig. 13, if the reinforcing member is a frame 25, the frame 25 is located outside the plurality of the conducting strips 22, and holes are provided on the frame 25, which can not only combine the plurality of the conducting strips 22 into a larger whole, preventing the plurality of the conducting strips 22 from being scattered or deformed, but also facilitate the positioning and installation of the first semi-finished product, making subsequent processing operations easier. As shown in Fig. 14, if the reinforcing member is a filling plate 26, the filling plate 26 is arranged at a position where the distance between two adjacent conducting strips 22 is large or the distribution density of the conducting strips 22 is high, which can also combine the plurality of the conducting strips 22 into a larger whole and prevent the plurality of the conducting strips 22 from being scattered or deformed. Compared with the frame 25, it has relatively less waste and can provide better anti-deformation properties.
S2, The bending portion 202 of the first semi-finished product is punched through the punching machine according to actual requirements so as to obtain a second semi-finished product. As shown in Fig. 15, the bending portion 202 of the wire strip 221 connected to one end of the PCB board 1 has the same size, while the bending portions 202 of the connecting pieces 222 at different positions have different sizes to be suitable for the second electrical component 4 at the corresponding position.
S3, Plastic is injected on an outer side of the second semi-finished product through an injection molding machine so as to obtain a third semi-finished product, so that the conducting strip 22 and the connecting plate 23 are embedded in the plastic plate 21.
S4, The third semi-finished product is first punched through the punching machine so as to remove the connecting plates 23 and the plastic in the insulating holes 201, cut off the plurality of the connecting plates 23 and remove the plastic in the reinforcing member and the fixing holes 101 and weight-reducing holes 203. During the processing, the plurality of the conducting strips 22 are kept at intervals by the action of the connecting plate 23. After the connecting plate 23 is cut off, there will be no electrical conduction between the adjacent conducting strips 22, thereby ensuring the safety of the high and low voltage signal connector. Then the insulating adhesive 24 is injected into the interior of the insulating holes 201, so that the two parts of the same connecting plate 23 cut off by the insulating hole 201 can maintain insulation and sealing, thereby obtaining an integrated component 2.
S5, The PCB board 1 on which the cable connector 31 is installed and the PCB board 1 on which the pre-charging resistor 32 and the pre-charging relay 33 are installed are prepared.
S6, The high-voltage copper busbars 6 and a plurality of the second electrical components 4 are installed successively in the housing 5, the second electrical components 4 are connected through the high-voltage copper busbars 6, and the second electrical components 4 are conducted through the electrical principle shown in Fig. 17.
S7, The PCB board 1 and the integrated component 2 are mounted on the housing 5, and the fixing holes 101 inside the two are clamped with the heat anchor rods 51 at corresponding positions thereto, the heat anchor rods 51 are heated and deformed through a heat anchor device, and the deformed heat anchor rods 51 are adopted to resist and fix the PCB board 1 and the integrated component 2.
S8, The ends of the wire strip 221 and the connecting piece 222 are welded to the corresponding positions on the PCB board 1 or the second electrical component 4 by means of laser welding, so as to complete the connection of the connectors in the BDU.

The above descriptions are only preferred embodiments of the present invention and are not intended to limit the present invention. Any modifications, equivalent replacements and improvements made within the spirit and principles of the present invention shall be comprised within the protection scope of the present invention.

## Claims

1. A high-low voltage integrated connector, comprising a printed circuit board PCB (1) and an integrated component (2), wherein
a plurality of the PCB boards (1) are provided, and a first electrical component (3) is fixedly arranged on the PCB board (1);
the integrated component (2) comprises a plastic plate (21) and a plurality of conducting strips (22) arranged at intervals, the conducting strips (22) are fixedly arranged in the plastic plate (21), with two ends extending out of the plastic plate (21) and fixedly arranged on a second electrical component (4) or the PCB (1), and the ends of the conducting strips (22) are electrically connected to the second electrical component (4) or are electrically connected to the first electrical component (3) through the PCB board (1).

2. The high-low voltage integrated connector according to claim 1, wherein a plurality of insulating holes (201) are provided on the plastic plate (21);
the integrated component (2) further comprises a connecting plate (23) and an insulating adhesive (24), wherein:
a plurality of the connecting plates (23) are integrally formed between two adjacent conducting strips (22), and the plurality of the connecting plates (23) are all cut off by the insulating holes (201); and
the plurality of the insulating holes (201) are all filled with the insulating adhesive (24).

3. The high-low voltage integrated connector according to claim 2, wherein at least one end of the conducting strip (22) is fixed to and electrically connected to the PCB board (1), wherein
if one end of the conducting strip (22) is fixed to and electrically connected to the PCB board (1), and the other end is fixed to and electrically connected to the second electrical component (4), the conducting strip (22) comprises a wire strip (221) and a connecting piece (222), and the wire strip (221) is fixedly arranged in the plastic plate (21), with two ends extending out of the plastic plate (21); the connecting piece (222) is integrally formed at one end of the wire strip (221), the connecting piece (222) is fixed to and electrically connected to the second electrical component (4), one end of the wire strip (221) away from the connecting piece (222) is fixed to and electrically connected to the PCB board (1), a Z-shaped bending portion (202) is provided on the connecting piece (222) and on one end of the wire strip (221) away from the connecting piece (222) by means of a bending method, and a side of the connecting piece (222) close to the second electrical component (4) resists on the second electrical component (4) fixed to and electrically connected to the connecting piece (222);
if the two ends of the conducting strip (22) are respectively fixed to and electrically connected to the two PCB boards (1), the conducting strip (22) comprises the wire strip (221), the wire strip (221) is fixedly arranged in the plastic plate (21), with two ends extending out of the plastic plate (21), the two ends of the wire strip (221) are both fixed to and electrically connected to the PCB boards (1), and the two ends of the wire strip (221) are each provided with a Z-shaped bending portion (202) by means of a bending method; and
a plurality of the wire strips (221) are flush with one another on a side away from the PCB board (1).

4. The high-low voltage integrated connector according to claim 3, wherein if the two PCB boards (1) are electrically connected to the same second electrical component (4) through the conducting strips (22), the two wire strips (221) in the two conducting strips (22) are integrally formed with the same connecting piece (222), and the connecting piece (222) is provided with two bending portions (202).

5. A high-low voltage integrated BDU, comprising the connector according to claim 4, a first electrical component (3), a second electrical component (4) and a housing (5), wherein the PCB board (1) and the plastic board (21) are provided with at least two fixing holes (101), and the connecting piece (222) is provided with at least one fixing hole (101); the second electrical component (4) is fixedly arranged on the housing (5), and a plurality of heat anchor rods (51) are integrally formed on the second electrical component (4) and the housing (5), the positions of the plurality of the heat anchor rods (51) correspond one to one with that of the plurality of the fixing holes (101), and the PCB board (1) and the plastic board (21) are both anchored to the housing (5) through the fixing holes (101) and the heat anchor rods (51), and the connecting piece (222) and the second electrical component (4) are anchored to the heat anchor rods (51) through the fixing holes (101).

6. The high-low voltage integrated BDU according to claim 5, wherein the high-low voltage integrated BDU further comprises a plurality of high-voltage copper busbars (6), the high-voltage copper busbars (6) are fixedly arranged in the housing (5) and are located on a side of the second electrical component (4) away from the PCB board (1);
the first electrical component (3) comprises a cable connector (31), a pre-charging resistor (32) and a pre-charging relay (33), two PCB boards (1) are provided, the cable connector (31) is fixedly arranged on one of the PCB boards (1), and the pre-charging resistor (32) and the pre-charging relay (33) are fixedly arranged on the other PCB board (1); the cable connector (31), the pre-charging resistor (32) and the pre-charging relay (33) are electrically connected to the conducting strips (22) through the PCB board (1);
the second electrical component (4) comprises a fuse (41), a main positive relay (42), a fast-charging positive relay (43), a main negative relay (44), a Shunt diverter (45) and a plurality of terminal posts (46), and the fuse (41), the main positive relay (42), the fast-charging positive relay (43), the main negative relay (44) and the Shunt diverter (45) are all fixedly arranged on the housing (5);
power supply ends of the fuse (41), the main positive relay (42) and the fast-charging positive relay (43) are successively connected in series through the high-voltage copper busbars (6) to form a positive circuit; the power supply ends of the pre-charging resistor (32) and the pre-charging relay (33) are successively connected in series through the PCB board (1) and then connected in parallel with the main positive relay (42) to form a pre-charging circuit; the power supply ends of the Shunt diverter (45) and the main negative relay (44) are successively connected in series through the high-voltage copper busbars (6) to form a negative circuit;
the high-voltage copper busbars (6) connected in series with the main negative relay (44) and the fast-charging positive relay (43) are fixed and electrically connected to the terminal posts (46), and one end of each terminal post (46) away from the high-voltage copper busbar (6) is fixed to and electrically connected to the connecting plate (222); the conducting strips (22) comprise a plurality of high-voltage conducting strips and a plurality of low-voltage conducting strips, and a current output end of the fuse (41), a current output end of the main positive relay (42), a current output end of the fast-charging positive relay (43), a current input end of the main negative relay (44) and a current output end of the Shunt diverter (45) are all electrically connected to the cable connector (31) through the high-voltage conducting strips and the PCB board (1); and two control ends of the main positive relay (42), two control ends of the fast-charging positive relay (43), two control ends of the main negative relay (44) and two control ends of the pre-charging relay (33) are all electrically connected to the cable connector (31) through the low-voltage conducting strips and the PCB board (1).

7. The high-low voltage integrated BDU according to claim 6, wherein the second electrical component (4) further comprises a fast-charging negative relay, the fast-charging negative relay is fixedly arranged on the housing (5), the power supply end of the fast-charging negative relay is connected in series with the negative circuit through the high-voltage copper busbars (6), the current input end of the fast-charging negative relay is electrically connected to the cable connector (31) through the high-voltage conducting strips and the PCB board (1), and the two control ends of the fast-charging negative relay are electrically connected to the cable connector (31) through the low-voltage conducting strips and the PCB board (1).

8. The high-low voltage integrated BDU according to claim 7, wherein the plurality of the high-voltage copper busbars (6) comprise at least one supporting copper busbar (61), and the supporting copper busbar (61) comprises two connecting portions (611), a supporting portion (612) and two reinforcing portions (613), wherein
one end of the connecting portion (611) is fixed to and electrically connected to the second electrical component (4), and the two connecting portions (611) are arranged in parallel and at intervals;
the supporting portion (612) is located between the two connecting portions (611) and is perpendicular thereto;
the two reinforcing portions (613) are respectively located between the two connecting portions (611) and the supporting portion (612), a cross section of the reinforcing portion (613) is U-shaped, and the two ends thereof are respectively continuously arranged with the connecting portion (611) and the supporting portion (612) and are integrally formed; and
the housing (5) is provided with a reinforcement groove (501), the reinforcing portion (613) is clamped with the reinforcement groove (501), and the supporting portion (612) resists on an inner wall of the housing (5).

9. A method for processing the high-low voltage integrated BDU according to any one of claims 6-8, comprising the following steps:
**S1**, taking out a copper plate, and punching a hole in the copper plate through a punching machine so as to obtain a first semi-finished product consisting of the conducting strips (22), the connecting plates (23) and a reinforcing member;
**S2**, punching the bending portion (202) of the first semi-finished product through the punching machine according to actual requirements so as to obtain a second semi-finished product;
**S3**, injecting plastic on an outer side of the second semi-finished product through an injection molding machine so as to obtain a third semi-finished product;
**S4**, first punching the third semi-finished product through the punching machine so as to remove the connecting plates (23) and the plastic in the insulating holes (201), cut off the plurality of the connecting plates (23) and remove the plastic in the reinforcing member and the fixing holes (101) and weight-reducing holes (203), and then injecting the insulating adhesive (24) into an interior of the insulating holes (201) to obtain the integrated component (2);
S5, preparing the PCB board (1) on which the cable connector (31) is installed and the PCB board (1) on which the pre-charging resistor (32) and the pre-charging relay (33) are installed;
S6, installing the high-voltage copper busbars (6) and a plurality of the second electrical components (4) successively in the housing (5), and connecting the second electrical components (4) through the high-voltage copper busbars (6);
S7, mounting the PCB board (1) and the integrated component (2) on the housing (5), and clamping the fixing holes (101) inside the two with the heat anchor rods (51) at corresponding positions thereto, heating and deforming the heat anchor rods (51) through a heat anchor device, and adopting the deformed heat anchor rods (51) to resist and fix the PCB board (1) and the integrated component (2); and
S8, welding the ends of the wire strip (221) and the connecting piece (222) to the corresponding positions on the PCB board (1) or the second electrical component (4) by means of laser welding.

10. The method for processing the high-low voltage integrated BDU according to claim 9, wherein in S1, the reinforcement member comprises a rectangular ring-shaped frame (25) located at a periphery of the conducting strip (22) and the connecting plate (23) and integrally formed with the two through the connecting plate (23) or a filling plate (26) located between a plurality of the conducting strips (22) and integrally formed with the conducting strips (22) through the connecting plate (23).
